# EUROPEAN PATENT APPLICATION

(11) **EP 4 586 348 A1**
(43) Date of publication of application: **16.07.2025**
(21) Application number: 24217436.5
(22) Date of filing: 04.12.2024
(51) Int. Cl.: H01M 10/04

(54) **AN APPARATUS AND RELATIVE METHOD FOR STACKING MONOCELLS FOR PRODUCING ELECTRICAL ENERGY STORAGE DEVICES**

(30) Priority: 21.12.2023 IT 202300027654
(71) Applicant: Fameccanica.Data S.p.A., 66020 San Giovanni Teatino (CH) (IT)
(72) Inventor: GUALTIERI, Diego, I-66020 San Giovanni Teatino (Chieti) (IT); CENTORAME, Oscar, I-66020 San Giovanni Teatino (Chieti) (IT); SACCO, Eugenio, I-66020 San Giovanni Teatino (Chieti) (IT)
(74) Representative: Buzzi, Notaro & Antonielli d'Oulx S.p.A.

(57) **Abstract**

An apparatus (10) for stacking monocells (100) for producing electrical energy storage devices, each consisting of electrode films (101, 102), and at least one separator (103) interposed between them (101, 102), The apparatus (10) comprises a transport member (13) which receives a stack (12) of monocells (100) and a collection device (14) provided with a support member (15) movable along a functional axis (F) between a collection position, in which it is within the overall dimensions of one of the monocells (100), and a rest position, in which it is outside the overall dimensions of that monocell (100), and a movement member (16) selectively movable, independently of the support member (15), along a stacking axis (S) between a support position, in which it cooperates with the support member (15), and at least one release position, in which it positions the monocells (100), in cooperation with the transport member (13).

## Description

### Field of the invention

The present invention refers to an apparatus and the relative method for stacking, at the end of the cycle and in a desired shape, a certain number of conductive monocells, for example stackable one on top of the other to define a cell for producing devices, or batteries, for the accumulation of electrical energy. The present invention also relates to a machine for producing electrical energy storage devices comprising a monocell stacking apparatus as described herein.

### State of the art

Machines and methods for producing conductive monocells intended for arrangement in stacks for the definition of cells normally used for producing devices or batteries for the storage of electrical energy, for example of the type known as prismatic or "pouch" batteries, are known.

Briefly, conductive monocells are substantially composed of a sandwich of layers defined by a first electrode film, or anode, made of conductive material, such as copper (Cu), a second electrode film, or cathode, also made of conductive material, such as aluminium (Al), and at least one insulating separator made of porous dielectric material, such as paper or polymer, placed between the first and second electrode films.

The monocells thus composed are operationally arranged in a stack together to define an entire conductive cell, which will be part of the storage battery that is being produced.

In the sector of producing conductive monocells, there is an ever-increasing need for a high level of automation of the typical steps of shaping, cutting and lamination of the alternating layers, normally required for the conformation of the conductive monocell. This automation has led to monocell production completion times of just tenths of a second.

It is also known that at the end of production, each cell is transferred by specific transfer conveyors to a stacking apparatus, wherein, by means of a forming device, the monocells are stacked along a stacking axis, advantageously vertical, to define an entire conductive cell of the storage battery.

The operations for the correct stacking of the individual conductive monocells are currently the bottleneck in the production of the conductive cell, as they require times that are longer than those for the production of the latter. This is mainly due to the fact that the monocells are fed at speed and must be arranged one above the other in a static condition and with high precision.

There are known stacking solutions that provide for a forced or "on-the-fly" release, that is, the transfer conveyor quickly releases each individual monocell at the forming device, or rather, by slowing down the speed of the monocells, before releasing them into the forming device for stacking.

Forced release, or on-the-fly, solutions essentially present problems related to the management of the relative arrangement precision between the stacked monocells, potentially resulting in conductive stacks with potential operational problems and low quality of the storage batteries thus produced.

Instead, solutions that involve slowing down the monocells before their release, impact the overall operating times of the production plant, causing a consequent slowing-down in the previous steps, negatively impacting the productivity of the plant and, consequently, production costs.

There is therefore a need to improve an apparatus and develop a method that can overcome at least one of the drawbacks of the prior art.

To do this, it is necessary to solve the technical problem of defining a correct and rapid stacking of conductive monocells, in substantial continuity with the timing and production methodologies of such monocells.

The present Applicant has devised, tested and implemented this invention to overcome the drawbacks of the prior art and to obtain these and additional objects and advantages.

### Object and summary of the invention

The scope of the present invention is to produce an apparatus and develop a method for stacking monocells, wherein each of the latter may be processed continuously and in such a way as to ensure its correct and effective positioning with respect to the other monocells foreseen in the same stack.

Another object of the present invention is to produce an apparatus and develop a method that allows the monocells to be stacked correctly while maintaining the production speeds of the monocells themselves substantially unchanged.

A further object of the present invention is to produce an apparatus and develop a method which do not negatively influence the productivity of the plant and, consequently, the production costs.

The present invention is expressed and characterized in the independent claims. The dependent claims set forth other characteristics of the present invention or variants of the main solution idea.

In accordance with the aforesaid objects and to solve the aforesaid technical problem in a new and original way, also obtaining notable advantages with respect to the prior art, an apparatus according to the present invention is applied for the stacking of monocells, each of which is constituted by at least one first film electrode, or copper anode, a second film electrode, or aluminium cathode, and at least one separator, made of dielectric or insulating material, interposed between the first and the second film electrode. These monocells may, for example, be of the type defined by a sandwich of layers formed, in sequence, by a first separator layer, the anode, another separator layer and the cathode, to define a stack for producing an electrical energy storage device, such as a prismatic battery, in a "pouch" or similar.

The apparatus according to the present invention comprises at least one transport member, or transport jig, configured to receive stacked monocells. In other words, on this transport member a desired stack of monocells is defined, arranged one above the other along a stacking axis, for example substantially vertical.

In accordance with an aspect of the present invention, the apparatus comprises at least one collection device, which is provided with at least one support member, in turn, selectively movable at least along a functional axis, for example substantially horizontal, between a collection position, in which it is located within the overall dimensions of at least one of the monocells, and a rest position, in which it is located outside the overall dimensions of these monocells.

In other words, the support member intervenes selectively to cooperate or not with the monocells, for example by acting as a temporary support for the monocells themselves.

The collection device further comprises at least one movement member, which is selectively movable, independently of the support member, at least along the stacking axis, between a support position, in which it cooperates at least temporarily with the support member and contacts the monocells, and at least one release position, in which it releases the monocells onto the transport member.

In other words, the movement member selectively acts as an additional and temporary support for the support member and as a mover of the monocells towards the transport device on which they will lie in a stack.

In this way, by exploiting the double and independent movement of the support member and the movement member, the monocells can first be collected in the desired number by the support member, and at least temporarily by the movement member, and then moved, or transferred, by the latter towards the transport member of the stacks, while other monocells can, in the meantime, be collected by the support member and so on.

This defines a partial overlapping of the operating times between the support member and the movement member, allowing the execution of operational steps at least partially at the same time.

With the solution according to the present invention, therefore, there is a substantial continuity of collection of the monocells in partial contemporaneity with their stacking in the transport member, defining a correct and rapid stacking of the conductive monocells, in substantial continuity with the production times and methodologies of these monocells.

Furthermore, this continuity of collection allows the monocells to be stacked correctly while maintaining the production speeds of the monocells themselves substantially unchanged, to the advantage of the productivity of the plant and, consequently, of the production costs of the stacks.

In accordance with another aspect of the present invention, the collection device also comprises a compacting member, independently movable along the functional axis, between a compacting position, in which it cooperates with the movement member to geometrically compact the collected monocells together, and a rest position, in which it is located outside the overall dimensions of the monocells.

In this advantageous solution of the present invention, the stack of monocells is already neatly and geometrically defined on the movement member, to the advantage of a greater guarantee of correct and effective positioning of the collected monocells, compared to the other monocells foreseen in the same stack.

Advantageously, the compacting member moves together with the movement member along the stacking axis, so that the compaction of the monocells may be carried out at the same time as the movement step towards the transport device, or jig, to the advantage of operating times and continuity of collection of the monocells.

In accordance with another aspect of the present invention, in which the monocells are fed by a transfer conveyor at a given production speed, the movement member moves along the stacking axis with a movement speed, which has a value advantageously higher than the production speed.

In this way, the continuity of collection of the monocells is further guaranteed, while the monocells already collected in the desired number are moved, or rather transferred, towards the transport member.

In solutions wherein each monocell comprises a support surface, for example operationally arranged downwards, and a surface, opposite to the support surface, for example operationally arranged upwards, the support member and the movement member cooperate at least temporarily with the support surface, while the compacting member cooperates at least temporarily with the surface opposite to the support surface.

In accordance with a further aspect of the present invention, the transport member is selectively movable along an evacuation axis different at least from the stacking axis, to transfer, or rather evacuate, the stacks thus formed towards other operating stations, for example storage stations, or stations for the production of electrical energy storage devices.

The scope of this invention also includes a method for stacking monocells for producing electrical energy storage devices, comprising at least one step wherein a stack of monocells is formed along the stacking axis, where this stack is received by a transport member.

This method also includes a collection step, prior to the forming and reception of the stack on the transport member, wherein the support member is selectively moved along a functional axis to the collection position, and wherein at least the movement member is selectively moved at least along the stacking axis to the support position, in which it cooperates at least temporarily with the support member.

Furthermore, the method according to the present invention comprises at least one movement step, at least partly subsequent to the collection step, wherein the movement member is selectively moved at least along the stacking axis, into the release position, wherein the stacked monocells are positioned in cooperation with the transport member.

Another aspect described here relates to a machine for producing electrical energy storage devices comprising a monocell stacking apparatus as described herein.

### Brief description of the drawings

These and other aspects, characteristics and advantages of the present invention will become clear from the following description of embodiments, given as a non-limiting example, with reference to the attached drawings in which:
- Fig. 1 is a schematic view of a monocell stacking apparatus, for producing electrical energy storage devices, according to the present invention, in a first operating condition;
- Fig. 2 is a schematic axonometric view of the operating condition of Fig. 1;
- Fig. 3 is a schematic view of a stacking apparatus according to the present invention, in a second operating condition;
- Fig. 4 is a schematic axonometric view of the operating condition of Fig. 3;
- Fig. 5 is a schematic view of a stacking apparatus according to the present invention, in a third operating condition;
- Fig. 6 is a schematic axonometric view of the operating condition of Fig. 5;
- Fig. 7 is a schematic view of a stacking apparatus according to the present invention, in a fourth operating condition;
- Fig. 8 is a schematic axonometric view of the operating condition of Fig. 7;
- Fig. 9 is a schematic view of a stacking apparatus according to the present invention, in a fifth operating condition;
- Fig. 10 is a schematic axonometric view of the operating condition of Fig. 9;
- Fig. 11 is a schematic view of a stacking apparatus according to the present invention, in a sixth operating condition;
- Fig. 12 is a schematic axonometric view of the operating condition of Fig. 11;
- Fig. 13 is a schematic view of a stacking apparatus according to the present invention, in a seventh operating condition;
- Fig. 14 is a schematic axonometric view of the operating condition of Fig. 13;
- Fig. 15 is a schematic view of a stacking apparatus according to the present invention, in an eighth operating condition;
- Fig. 16 is a schematic axonometric view of the operating condition of Fig. 15;
- Fig. 17 is a schematic view of a stacking apparatus according to the present invention, in a ninth operating condition;
- Fig. 18 is a schematic axonometric view of the operating condition of Fig. 17;
- Fig. 19 is a schematic view of a stacking apparatus according to the present invention, in a tenth operating condition;
- Fig. 20 is a schematic axonometric view of the operating condition of Fig. 19; and
- Fig. 21 schematically illustrates in cross-section a monocell stacked with the apparatus of Fig. 1.

It is specified that in this description the phraseology and terminology used, as well as the figures of the attached drawings, even as described, have the sole function of illustrating and explaining the present invention better, having a non-limiting exemplifying function of the invention itself, the scope of protection being defined by the claims.

To facilitate understanding, identical reference numbers have been used, where possible, to identify identical common elements in the Figures. It should be understood that elements and characteristics of an embodiment can be conveniently combined or incorporated in other embodiments without further specification.

### Detailed description

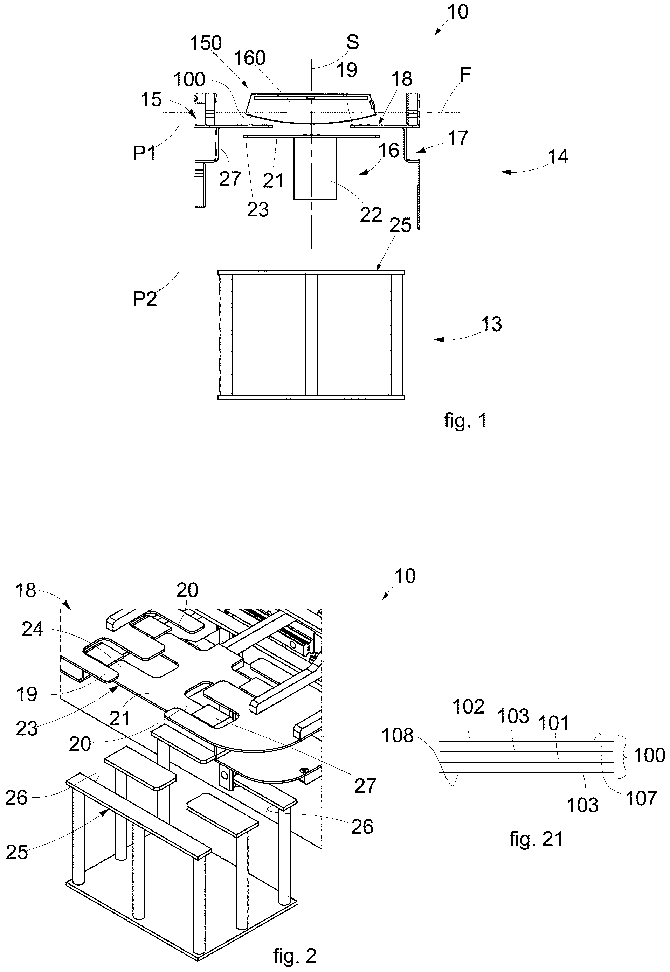

With reference to Figure 1, an apparatus 10 according to the present invention is used to stack a plurality of conductive monocells 100 together, and is arranged downstream of a transfer conveyor 150, of which only one housing member, or shoe 160, for handling the monocells 100 is schematically illustrated.

The transfer conveyor 150 could be of the rotary type and could have a configuration other than circular, such as linear, sequenced, with fixed or variable pitch, just as the shoe 160 could have a planar shape, rather than a curvilinear one, as illustrated for example.

The transfer conveyor 150 is typically arranged at the end of a production line or plant of the monocells 100, which are substantially constituted (Fig. 21) by a sandwich of layers formed, in sequence, of a separator layer 103 in dielectric or in any case insulating material, a copper anode 101, another separator layer 103 and an aluminium cathode 102.

The apparatus 10 according to the present invention allows defining a stack 12 of monocells 100, and this stack 12 will become a functional part in the construction of an electrical energy storage device, such as for example a prismatic battery, in a "pouch" or similar, not illustrated.

The apparatus 10 according to the present invention comprises a transport member, or transport jig 13, to receive stacked monocells. In other words, the monocells 100 are arranged on the jig 13 one above the other along a stacking axis S, which is substantially vertical, to define the stack 12.

The apparatus 10 according to the present invention also comprises a collection device 14, arranged in cooperation both with the shoe 160 when the latter is in an operating condition for releasing the monocell 100, and with the jig 13, so as to collect the monocells 100 from the shoe 160 and, as we will see, arrange them in stacks 12 on the jig 13.

The collection device 14 comprises a support member 15, a movement member 16 and a compacting member 17.

The support member 15 comprises a pair of support plates 18 selectively movable in opposition to each other along a functional axis F, which is substantially horizontal. The two support plates 18, according to a preferred embodiment, may also envisage a synchronous movement along the stacking axis S, the specific functionality of which will be explained in detail below.

Each support plate 18 comprises relative support ends 19 which, due to the selective movement along the functional axis F, may be moved between a collection position, in which they are located underneath the shoe 160 and within the space of the monocell 100 released from the latter, and a rest position, in which they are located outside the space of the monocell 100.

Advantageously, each support plate 18 has a substantially comb-like shape, defining relative cooperation seats 20, at the relative support ends 19.

The movement member 16 comprises a movement plate 21 and a movable carriage 22. The latter is configured for the selective and independent movement of the movement plate 21 along the stacking axis S between a support position, in which this movement plate 21 cooperates at least temporarily with the support plate 18, and at least one release position, in which it positions the monocells 100, in cooperation with the jig 13, i.e. on the jig 13 for the purposes of forming the stack 12.

The mobile carriage 22 is motorized, for example, by linear motors (not illustrated and of a known type), or other electronic systems capable of moving the movement plate 21 along the stacking axis S with a movement speed TV of an absolute value higher than a production speed PV, or of feeding by the shoes 160 or, at least, of formation of the desired stack 12 of monocells 100.

The movement plate 21 comprises relative cooperation ends 23 which, due to the selective movement along the stacking axis S, come to be in selective cooperation both with the support ends 19 of the support plates 18 and with the jig 13.

In particular, each cooperation end 23 has relative prongs 24 configured to define a shape coupling with the cooperation seats 20, so that when the movement plate 21 is in its support position it defines a single support plane P1 on which the shoes 160 progressively deposit the monocells 100.

According to embodiments not illustrated, on the support plates 18 and/or on the movement plate 21, a positioning seat for the monocells 100 may be at least partially obtained, so as to induce the latter to assume the same and unique reciprocal positioning, once released from the shoes 160.

Considering that each monocell 100 comprises a support surface 108, for example facing downwards, the support plates 18 and the movement plate 21 cooperate at least temporarily with this support surface 108.

The jig 13 comprises a release plate 25 provided with a shape 26 coordinated with the shape of the movement plate 21, taking into account the shape of the prongs 24, so that when the movement plate 21 is in its release position it defines a single release plane P2, on which the stack 12 of monocells 100 is placed and defined.

Furthermore, the jig 13 is movable along an evacuation axis E, in this case substantially perpendicular to both the stacking axis S and the functional axis F, and substantially parallel to the latter, so as to transfer, or evacuate, the stacks 12 thus formed towards subsequent storage or battery production equipment.

In embodiments, the aforesaid compacting member 17 is configured to cooperate at least temporarily with a surface 107 of the monocell 100, opposite to said support surface 108.

In embodiments, the compacting member 17 comprises two pairs of retainers 27 of substantially corrugated shape and arranged on opposite sides with respect to the position of the monocells 100 placed on the support plane P1. Even if not specifically illustrated, embodiments are not excluded wherein the compacting member 17 may comprise additional operating elements, such as for example motors, guides, sensors or others, serving the specific functions and operating times of the apparatus 10 according to the present invention.

Each of the retainers 27 extends with respect to the movement plate 21, so as to contact, when operational, the surface 107 of the monocell 100, opposite the support surface 108, with which the support plates 18 and the movement plate 21 cooperate. In particular, the retainers 27 are configured to contact the surface 107 of the last monocell 100 that defines the stack 12.

In fact, each pair of retainers 27 is selectively movable in opposition along the functional axis F, which is substantially horizontal, between a compaction position, in which it cooperates with the movement plate 21 and is located within the overall dimensions of the monocells 100, in particular in contact with the surface 107, and a rest position, in which it is located outside the overall dimensions of the monocells 100.

To allow their compaction condition, even in extension to the support plane P1, each retainer 27 has a size and a reciprocal distance such as to slide freely through the cooperation seats 20, with respect to both the stacking axis S and the functional axis F.

Furthermore, the pair of retainers 27 moves together with the movement plate 21 along the stacking axis S, although it is not excluded, according to a preferential embodiment, that it may also include a movement along the stacking axis S independent of the movement plate 21, the specific functionality of which will be explained in detail below.

With reference to the operational sequence illustrated in Figures 1 to 20, the operation of the apparatus 10 described up to now, which falls within the method according to the present invention, comprises the following steps.

In a first step of use of the apparatus 10 (Figs. 1 and 2), the shoe 160 is positioned by the transfer conveyor 150 in a release position of a first monocell 100.

At this step, the support ends 19 of each support plate 18 are in their collection position, substantially coplanar with the support plane P1, underneath the shoe 160 and within the space occupied by the monocell 100 being released from the latter.

Always in this operating condition, the movement plate 21 is slightly lower than the support plane P1, while the retainers 27 of the compacting member 17 are in their rest position, outside the space of the monocells 100, and inside the cooperation seats 20.

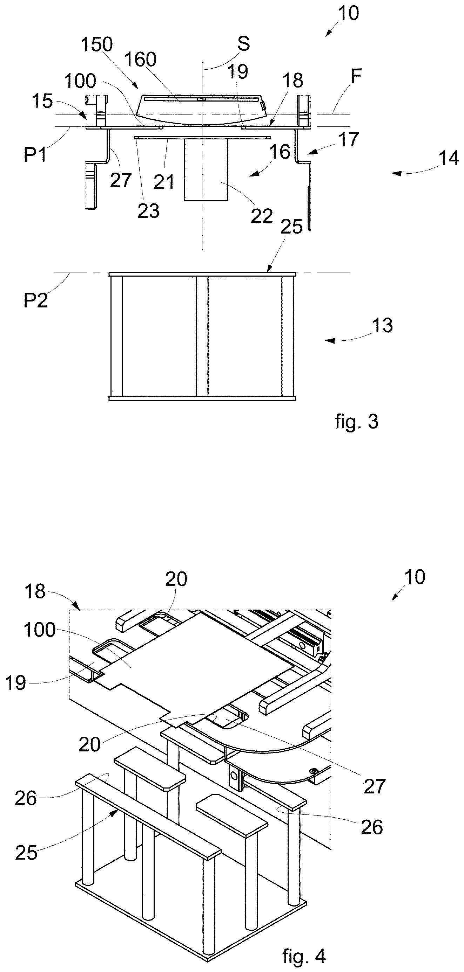

In this way, as illustrated in Figures 3 and 4, the monocell 100, once released, may be temporarily freely supported by the support ends 19 on the support plane P1.

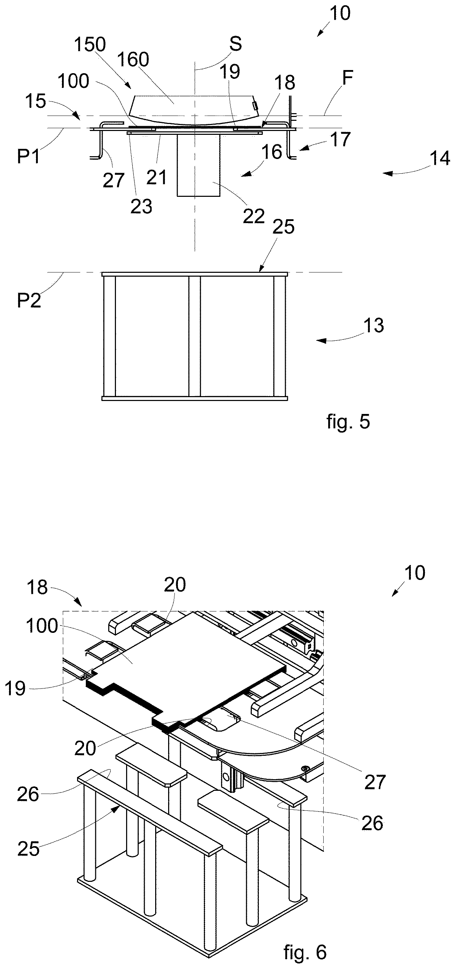

In the subsequent operating condition illustrated in Figures 5 and 6, the monocells 100, progressively released by the shoes 160, begin to accumulate one on top of the other on the support plane P1 along the stacking axis S. For the sole object of understanding the actual functionality of the apparatus 10 according to the present invention, the shoes 160 may have a sequential release frequency of the monocells 100 with a timing of a few tenths of a second, for example approximately 0.2 s.

At this step, the movement plate 21 begins to be moved by the mobile carriage 22, towards the support plane P1, along the stacking axis S, to bring itself into cooperation with the support plates 18.

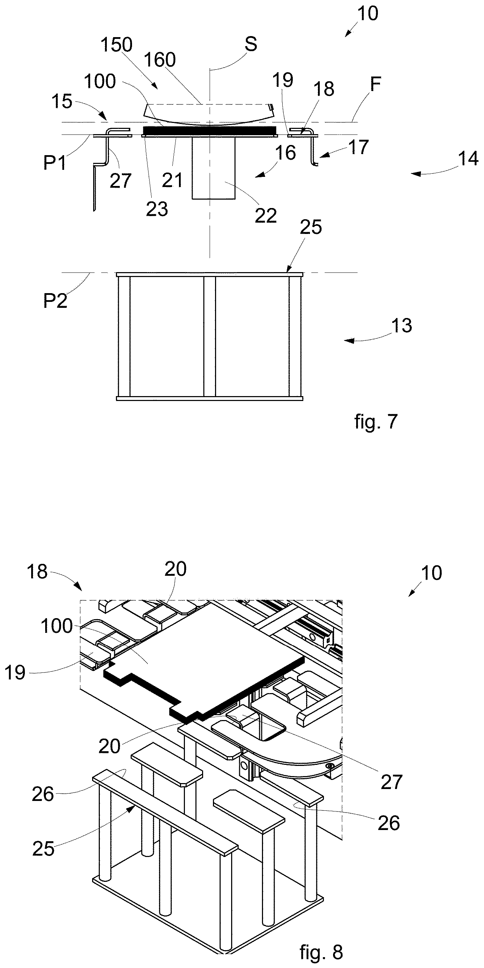

In the next operating condition illustrated in Figures 7 and 8, the movement plate 21 is in its support position and supports the monocells 100 progressively stacked on the support plane P1, along the axis S.

In this same operating condition, the two support plates 18 are moved along the functional axis F, to assume their rest position outside the space of the monocells 100.

In particular, even if not specifically illustrated, once the movement plate 21 is brought into its support position, the two support plates 18 advantageously perform a limited downward movement with respect to the support plane P1 along the stacking axis S, of a value sufficient to detach from the surface 108 of the first monocell 100. This limited movement thus allows the two support plates to move along the functional axis F towards their rest position, without contact with the first released monocell 100, and thus avoiding accidentally damaging it.

Once the number of monocells 100 required to form a stack 12 has been reached, the movement plate 21 is moved downwards along the stacking axis S, together with the retainers 27. At the same time, both the support plates 18 and the retainers 27 are moved along the functional axis F, so as to reach the support position and the compaction position, respectively.

In this way, as soon as the stack 12 of monocells 100 is composed, the support plates are in the condition to support new monocells 100, while the movement plate 21, assisted by the compacting action of the retainers 27, transports the defined stack 12 towards the jig 13.

Advantageously, in this step, the retainers 27 may move independently along the stacking axis S, so as to contact, possibly with a light pressure, the surface 107 of the last stacked monocell 100, ensuring the correct and reciprocal positioning of the monocells 100 of the stack 12, during their movement towards the jig 13.

Furthermore, it is not excluded that further compacting members 17 may be provided, for example configured to act laterally on the stack 12, or at the corners or other functional parts, to perfect the reciprocal position of the monocells 100, during the movement step of the stack 12 itself along the stacking axis S, towards the jig 13.

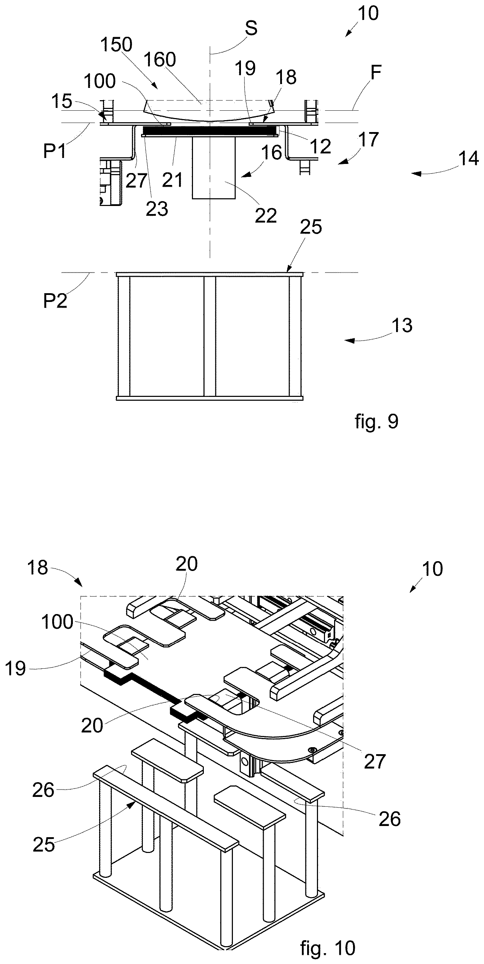

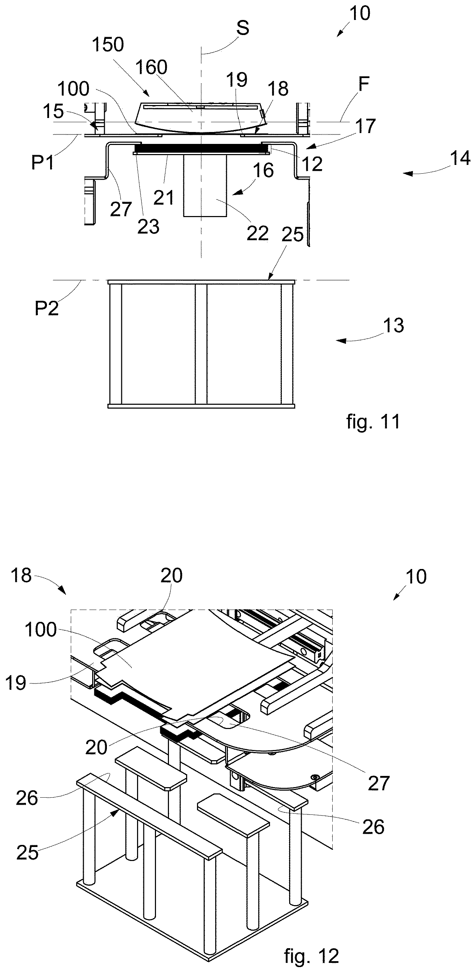

Figures 11 and 12 illustrate an operating condition immediately following that shown in Figures 9 and 10, wherein a new first monocell 100 is released from the shoe 160 and wherein the support plates 18 support this monocell 100 on the support plane P1, while the movement plate 21 moves with the stack 12 towards the jig 13, along the stacking axis S.

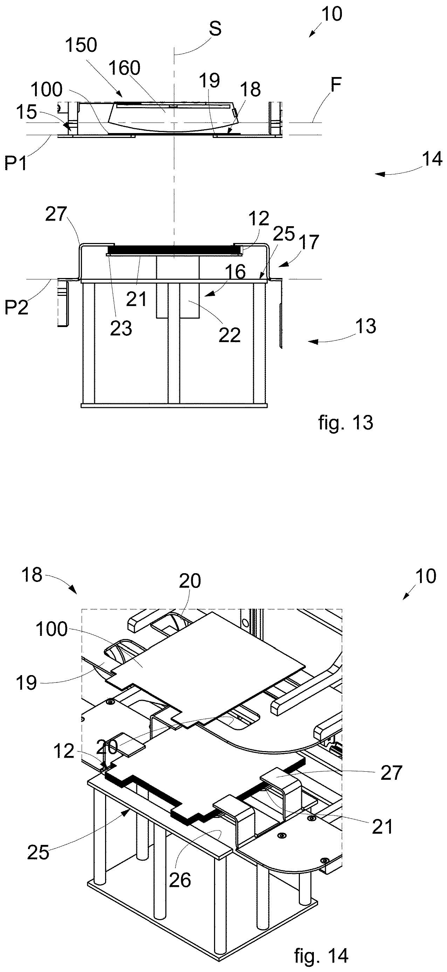

In the following Figures 13 and 14, a subsequent operating condition is represented, on the support plane P1, a plurality of monocells 100 begin to stack, while the movement plate 21 is increasingly closer to the jig 13.

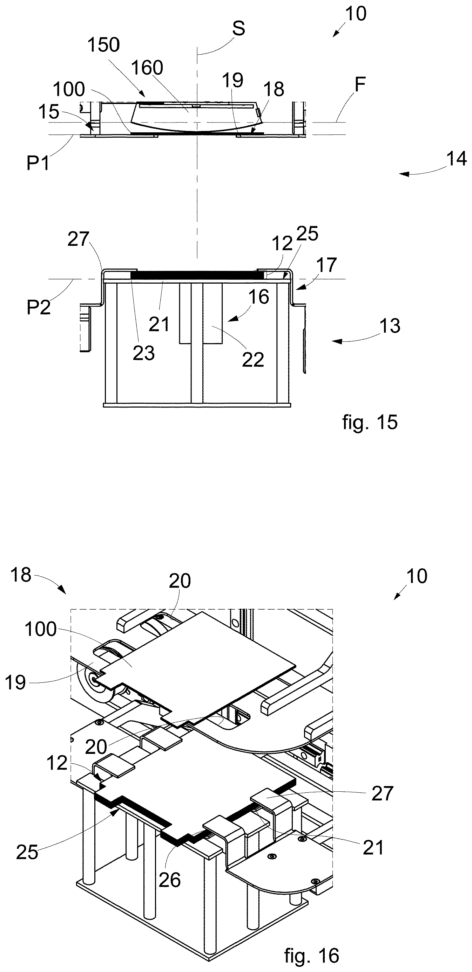

In the following Figures 15 and 16, the movement plate 21 reaches its release position, in which it deposits and defines the stack 12 of monocells 100 on the release plane P2, resting on the collection plate 25. At the same time, the support plates 18 continue to support the monocells 100 which are progressively released from the shoes 160.

In this condition of cooperation between the movement plate and the collection plate 25, the prongs 24 slide into the shape 26, to avoid interference between the parts.

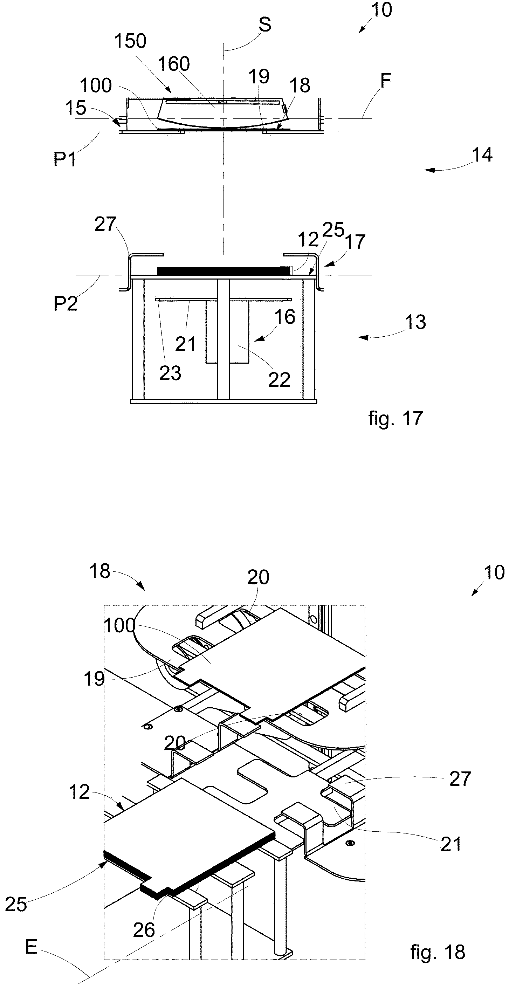

Subsequently, as illustrated in Figures 17 and 18, the movement plate 2 is further moved downwards along the stacking axis S, so as to detach from the release plane P2, and leave the stack 12 resting only on the collection plate 25. At the same time, the holders 27 move independently on the movement plane 21, to lift themselves with respect to the stack 12, along the stacking axis S.

In this operating condition, the jig 14 moves along the evacuation axis E to transport the stack 12 towards subsequent operating steps. The reciprocal conformations of the jig 13 and the movement member 16 are such as to avoid any type of mechanical interference between the two, during movement along the evacuation axis E.

Even if not illustrated, it is not excluded that the jig 13 may include generic means for retaining the stack 12, either of the concealed type or fixed with respect to the collection plate 25, and configured to maintain the stack 12 during the movement steps along the axis E.

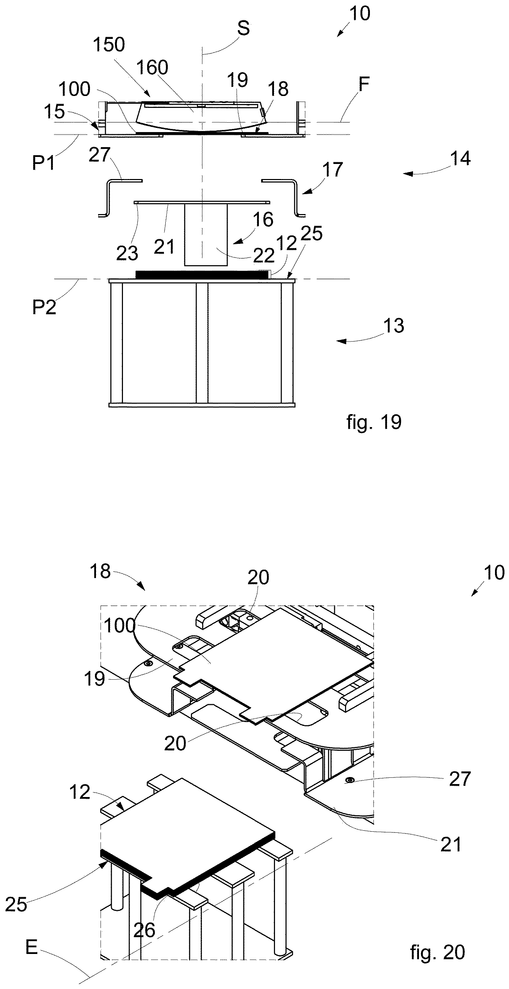

Finally (Figs. 19 and 20), but in substantial continuity with a new production cycle of a stack 12, the latter being simultaneously formed on the support plates 18, the movement plate 21 is moved by the mobile carriage 22 along the stacking axis S, to reach its support position, in cooperation with the support plates 18, as previously described.

From this operating condition, the sequence described so far is repeated cyclically, to define new stacks 12 of monocells 100.

Another aspect described here relates to a machine for producing electrical energy storage devices comprising a monocell stacking apparatus as described herein.

In general, this machine may be understood as a plant for producing and stacking monocells for producing devices for the storage of electrical energy. For example, such a plant generally comprises at least the following common parts:
- a raw material film supply station, for example two electrode films and two separator films;
- stations for treating electrode films, for example specifically singling and notching cutting;
- a raw material film lamination station, to couple the singled and notched electrode films and one or more separator films;
- a cutting station for the separation of monocells;
- a monocell stacking station to form monocell stacks which are subsequently processed for producing electrical energy storage devices.

The monocell stacking apparatus 10 described herein may be part of the stacking station.

It is clear that modifications and/or additions of parts can be made to the apparatus 10 and the method described up to now, without departing from the scope of the present invention as defined by the claims.

It is also clear that, although the present invention has been described with reference to some specific examples, an expert in the field will be able to create other equivalent forms of apparatus and method for stacking monocells for producing electrical energy storage devices, having the characteristics expressed in the claims and therefore all falling within the scope of protection defined therein.

In the following claims, the references in brackets have the sole object of facilitating the reading and should not be considered as limiting factors regarding the scope of protection defined by the claims themselves.

## Claims

1. An apparatus (10) for stacking monocells (100) for producing electrical energy storage devices, each monocell (100) consisting of at least a first electrode film (101), a second electrode film (102) and at least one separator (103) interposed between said first and second electrode film (101, 102),
**characterized in that** said apparatus (100) comprises:
at least one transport member (13) configured to receive a stack (12) of said monocells (100) stacked along a stacking axis (S),
at least one collection device (14) provided with at least one support member (15) selectively mobile at least along a functional axis (F) between a collection position, in which it is located within the overall dimensions of at least one of said monocells (100), and a resting position, in which it is located outside the overall dimensions of at least one of said monocells (100), and with at least one movement member (16) selectively mobile, independently of said support member (15), at least along said stacking axis (S) between a support position, in which it cooperates at least temporarily with said support member (15), and at least one release position, in which it positions said monocells (100) stacked on said transport member (13), said movement member (16) comprising at least one movement plate (21) configured to at least temporarily support said monocells (100) and selectively mobile along said stacking axis (S) between said support position and at least said release position.

2. An apparatus (10) as in claim 1, wherein said functional axis (F) is substantially perpendicular to said stacking axis (S).

3. An apparatus (10) as in claim 1 or 2, wherein said collection device (14) comprises a compacting member (17) independently mobile at least along said functional axis (F) between a compacting position, in which it cooperates with said movement member (16) and is located within the overall dimensions of at least one of said monocells (100), and a resting position, in which it is located outside the overall dimensions of at least one of said monocells (100).

4. An apparatus (10) as in claim 3, wherein said compacting member (17) moves together with said movement member (16) along said stacking axis (S).

5. An apparatus (10) as in any of the preceding claims, wherein a transfer conveyor (150) feeds said monocells (100) at a certain production speed (PV), wherein said movement member (16) moves along said stacking axis (S) with a movement speed (TV) higher than said production speed (PV).

6. An apparatus (10) as in any of the preceding claims, wherein each of said monocells (100) comprises a rest surface (108) and a surface (107), opposite to said rest surface (108), wherein said support member (15) and said movement member (16) are able to cooperate at least temporarily with said rest surface (108).

7. An apparatus (10) as in any of the preceding claims, wherein said transport member (13) is selectively mobile along an evacuation axis (E), different at least from said stacking axis (S), to evacuate the stacked monocells (100).

8. A method for stacking monocells (100) for producing electrical energy storage devices, each monocell (100) consisting of at least a first electrode film (101), a second electrode film (102) and at least one separator (103) interposed between said first and second electrode film (101, 102), comprising at least one step wherein a stack (12) of a plurality of said monocells (100) is formed along a stacking axis (S), said stack (12) being received by a transport member (13), **characterized in that** it comprises at least one collection step, prior to the step wherein the stack (12) of monocells (100) is received by the transport member (13), wherein a support member (15) of a collection device (14) is selectively moved along a functional axis (F) into a collection position, in which it is located within the overall dimensions of at least one of said monocells (100), and wherein at least one movement member (16) of said collection device (14) is selectively moved at least along said stacking axis (S) into a support position, in which it cooperates at least temporarily with said support member (15), and at least one movement step, at least partly subsequent to said collection step, wherein said movement member (16) is selectively moved at least along said stacking axis (S) into a release position, in which it positions said monocells (100) on said transport member (13).

9. A stacking method as in claim 8, wherein in said collection step said support member (15) is selectively moved independently along said functional axis (F) into a resting position, in which it is located outside the overall dimensions of at least one of said monocells (100), at least when said movement member (16) is in said support position.

10. A machine for producing electrical energy storage devices comprising an apparatus for stacking monocells as in any claim from 1 to 7.
